# EUROPEAN PATENT APPLICATION

(11) **EP 4 821 596 A1**
(43) Date of publication of application: **14.10.2026**
(21) Application number: 24900412.8
(22) Date of filing: 18.11.2024
(51) Int. Cl.: B01J 23/63, B01D 53/94, B01J 35/57, F01N 3/10, F01N 3/28

(54) **EXHAUST GAS PURIFICATION CATALYST**

(30) Priority: 04.12.2023 JP 2023204822
(71) Applicant: Mitsui Kinzoku Company, Limited, Tokyo 141-8584 (JP)
(72) Inventor: MORIYAMA, Naoki, Ageo-shi, Saitama 362-0025 (JP); IWASHINA, Katsuya, Ageo-shi, Saitama 362-0025 (JP); KURAMOCHI, Satoru, Ageo-shi, Saitama 362-0025 (JP)
(74) Representative: Novagraaf Technologies
(86) International application number: PCT/JP2024/040826
(87) International publication number: WO 2025/121117

(57) **Abstract**

An exhaust gas purification catalyst includes: a substrate; and a catalyst layer provided on the substrate, in which the catalyst layer includes a layer a, a layer b, and a layer c, the layer a is provided on an upstream side of the layer b in an exhaust gas flow direction, the layer c is laminated with at least one of the layer a or the layer b, in a laminated portion of the layer c with at least one of the layer a or the layer b, the layer c is provided at a position farther from the substrate than at least one of the layer a or the layer b, the layer a contains Pd, the layer b contains Pt, a ratio C_{Pd}/C_{Pt} of a mass content C_{Pd} of Pd contained in the layer a to a mass content C_{Pt} of Pt contained in the layer b is greater than 1, the layer c contains Rh, a Ce-Zr-based composite oxide, and a Zr-based oxide, and in the layer c, at least a part of the Rh is supported on the Zr-based oxide.

## Description

### TECHNICAL FIELD

The present invention relates to an exhaust gas purification catalyst.

### BACKGROUND ART

Exhaust gas (also referred to as exhaust gas in abbreviated form in Japanese) emitted from internal combustion engines of automobiles, motorcycles, and the like contains harmful components such as HC (hydrocarbons), CO (carbon monoxide), and NOx (nitrogen oxides). Conventionally, a three-way catalyst has been used for the purpose of purifying these harmful components and rendering them harmless. As three-way catalysts, those using noble metals such as Pt (platinum), Pd (palladium), and Rh (rhodium) are known, and Pt and Pd mainly act in the oxidative purification of HC and CO, while Rh mainly acts in the reductive purification of NOx. In recent years, due to strengthened exhaust gas regulations and heightened environmental awareness, attempts have been made to improve the exhaust gas purification performance of the noble metal catalyst as described above.

Patent Literature 1 describes an exhaust gas purification catalyst including a substrate and a catalyst coat layer formed on the substrate, wherein the catalyst coat layer contains Rh fine particles and a co-catalyst composed of a Ce-Zr-based composite oxide and a Zr-based composite oxide containing no Ce oxide, the Rh fine particles have an average particle diameter and a standard deviation of particle diameter within specific ranges, and the Rh fine particles are supported on each of the Ce-Zr-based composite oxide and the Zr-based composite oxide containing no Ce oxide.

Further, Patent Literatures 2 and 3 describe an exhaust gas purification catalyst that is disposed in an exhaust passage of an internal combustion engine and that purifies exhaust gas emitted from the internal combustion engine, the exhaust gas purification catalyst including a substrate defining cells through which the exhaust gas flows, and a catalyst layer provided on the surface of the substrate, wherein the catalyst layer includes a palladium layer containing palladium and extending from a first end portion, which is an end portion of the cells on the side into which the exhaust gas flows, toward a second end portion, which is an end portion of the cells on the side from which the exhaust gas flows out, a platinum layer containing platinum and extending from the second end portion toward the first end portion, and a rhodium layer containing rhodium and laminated on both the palladium layer and the platinum layer.

In addition, Patent Literature 4 describes a trimetallic layered catalyst article including:
a. an upper layer containing platinum supported on at least one of an oxygen storage component, a zirconia component, and an alumina component, and rhodium supported on the oxygen storage component;
b. a lower layer including a front zone and a rear zone, wherein the front zone contains palladium supported on the oxygen storage component and the alumina component, and the rear zone contains platinum supported on at least one of the alumina component, a ceria component, and the oxygen storage component; and
c. a substrate,
wherein a weight ratio of palladium to platinum is in a range of 1.0:0.4 to 1.0:2.0.

### CITATION LIST

### PATENT LITERATURE

Patent Literature 1: JP2021-104472A
Patent Literature 2: JP2020-157262A
Patent Literature 3: JP2020-157263A
Patent Literature 4: WO 2020/190999

### SUMMARY OF INVENTION

### TECHNICAL PROBLEM

In recent years, exhaust gas purification catalysts have been required to have improved NOx purification performance immediately after starting an internal combustion engine such as an engine.

Patent Literature 1 discloses that NOx can be purified even at a low temperature (i.e., low-temperature activity is improved) by supporting Rh fine particles on each of a Ce-Zr-based composite oxide and a Zr-based composite oxide.

However, the present inventors have found that the exhaust gas purification catalyst described in Patent Literature 1 has a problem in that the purification performance for non-methane hydrocarbons (NMHC), which are hydrocarbons other than methane, is poor.

Therefore, an object of the present invention is to provide an exhaust gas purification catalyst capable of achieving both NOx purification performance immediately after starting the internal combustion engine and NMHC purification performance immediately after starting the internal combustion engine.

### SOLUTION TO PROBLEM

The gist of the present invention is as follows.
[1] An exhaust gas purification catalyst including:
   a substrate; and
   a catalyst layer provided on the substrate, in which
   the catalyst layer includes a layer a, a layer b, and a layer c,
   the layer a is provided on an upstream side of the layer b in an exhaust gas flow direction,
   the layer c is laminated with at least one of the layer a or the layer b,
   in a laminated portion of the layer c with at least one of the layer a or the layer b, the layer c is provided at a position farther from the substrate than at least one of the layer a or the layer b,
   the layer a contains Pd,
   the layer b contains Pt,
   a ratio C_{Pd}/C_{Pt} of a mass content C_{Pd} of Pd contained in the layer a to a mass content C_{Pt} of Pt contained in the layer b is greater than 1,
   the layer c contains Rh, a Ce-Zr-based composite oxide, and a Zr-based oxide, and
   in the layer c, at least a part of the Rh is supported on the Zr-based oxide.
[2] The exhaust gas purification catalyst according to [1], in which the layer c does not contain Al, or in a case where Al is contained, a content of Al in terms of Al₂O₃ is 22 % by mass or less with respect to a mass of the layer c.
[3] The exhaust gas purification catalyst according to [1] or [2], in which a ratio M_{ZrO2}/M_{CZ} of a mass M_{ZrO2} of the Zr-based oxide contained in the layer c to a mass M_{CZ} of the Ce-Zr-based composite oxide contained in the layer c is 1.5 or more and 6.0 or less.
[4] The exhaust gas purification catalyst according to any one of [1] to [3], in which a ratio C_{Pd}/C_{ZrO2} of the mass content C_{Pd} of Pd contained in the layer a to a mass content C_{ZrO2} of the Zr-based oxide contained in the layer c is 0.015 or more and 0.120 or less.
[5] The exhaust gas purification catalyst according to any one of [1] to [4], in which a ratio C_{Pt}/C_{ZrO2} of the mass content C_{Pt} of Pt contained in the layer b to a mass content C_{ZrO2} of the Zr-based oxide contained in the layer c is 0.001 or more and 0.008 or less.

### ADVANTAGEOUS EFFECTS OF INVENTION

According to the present invention, it is possible to provide an exhaust gas purification catalyst capable of achieving both a NOx purification performance immediately after an internal combustion engine is started and NMHC purification performance immediately after the internal combustion engine is started.

### BRIEF DESCRIPTION OF DRAWINGS

[FIG. 1] FIG. 1 is a schematic diagram of an exhaust gas purification catalyst according to one embodiment of the present invention.
[FIG. 2] FIG. 2 is a schematic diagram of an exhaust gas purification catalyst according to one embodiment of the present invention.
[FIG. 3] FIG. 3 is a schematic diagram of an exhaust gas purification catalyst according to one embodiment of the present invention.
[FIG. 4] FIG. 4 is a schematic diagram of an exhaust gas purification catalyst according to one embodiment of the present invention.
[FIG. 5] FIG. 5 is a schematic diagram of an exhaust gas purification catalyst according to one embodiment of the present invention.
[FIG. 6] FIG. 6 is a schematic diagram of an exhaust gas purification catalyst according to one embodiment of the present invention.
[FIG. 7] FIG. 7 is a schematic diagram of an exhaust gas purification catalyst according to one embodiment of the present invention.
[FIG. 8] FIG. 8 is a schematic diagram of an exhaust gas purification catalyst according to one embodiment of the present invention.
[FIG. 9] FIG. 9 is a schematic diagram of an exhaust gas purification catalyst according to one embodiment of the present invention.
[FIG. 10] FIG. 10 is a schematic diagram of an exhaust gas purification catalyst according to one embodiment of the present invention.

### DESCRIPTION OF EMBODIMENTS

Hereinafter, embodiments of the present invention will be described in detail.

An exhaust gas purification catalyst of the present invention is an exhaust gas purification catalyst including:
a substrate; and
a catalyst layer provided on the substrate, in which
the catalyst layer includes a layer a, a layer b, and a layer c,
the layer a is provided on an upstream side of the layer b in an exhaust gas flow direction,
the layer c is laminated with at least one of the layer a or the layer b,
in a laminated portion of the layer c with at least one of the layer a or the layer b, the layer c is provided at a position farther from the substrate than at least one of the layer a or the layer b,
the layer a contains Pd,
the layer b contains Pt,
a ratio C_{Pd}/C_{Pt} of a mass content C_{Pd} of Pd contained in the layer a to a mass content C_{Pt} of Pt contained in the layer b is greater than 1,
the layer c contains Rh, a Ce-Zr-based composite oxide, and a Zr-based oxide, and
in the layer c, at least a part of the Rh is supported on the Zr-based oxide.

The exhaust gas purification catalyst of the present invention (also referred to simply as a "catalyst") provides the effect that, by the above configuration, both NOx purification performance immediately after an internal combustion engine is started and NMHC purification performance immediately after the internal combustion engine is started can be achieved. The mechanism by which the above effect is obtained by the present invention has not been completely clarified, but the present inventors have presumed as described below. However, the present invention is not limited by the following presumed mechanism.

In general, Rh is considered to mainly contribute to purification of NOx, and it is considered that, in order to allow Rh to sufficiently exhibit its NOx purification performance, an oxygen storage component (also referred to as an "OSC material") having a capability (OSC capability) to alleviate fluctuations in oxygen concentration in exhaust gas is effective. In the present invention, the Ce-Zr-based composite oxide (also referred to as a "CZ") capable of functioning as an OSC material is used.

The CZ functions not only as an OSC material but also as a support, but CeO₂ in the CZ has a property of oxidizing Rh to decrease the activity. Therefore, not only the CZ but also a support other than CZ may be used for a catalyst layer containing Rh. The most common support other than the CZ is a support containing Al₂O₃ as a main component.

Since an exhaust gas purification reaction is a chemical reaction, the higher the temperature, the faster the reaction proceeds, and a high purification rate is obtained. Since the temperature of the catalyst is low immediately after the internal combustion engine is started, the purification rate becomes low. In order to improve the NOx purification performance immediately after the internal combustion engine is started, it is effective to quickly raise the temperature of the catalyst after the internal combustion engine is started. However, since Al₂O₃ has a large specific heat, the temperature rise is slow, which is considered to be disadvantageous for improving the purification performance immediately after the internal combustion engine is started. Therefore, in the present invention, a Zr-based oxide having a specific heat smaller than that of Al₂O₃ and, unlike the CZ, not having a property of oxidizing Rh is used in combination with the CZ in the layer c containing Rh. Accordingly, it is considered that the NOx purification performance immediately after the internal combustion engine is started can be improved.

From the viewpoint of suppressing a phenomenon that Rh is oxidized by the CZ and the activity decreases, at least a part of Rh needs to be supported on the Zr-based oxide.

It is considered that Rh contributes not only to purification of NOx but also to purification of non-methane hydrocarbons (NMHC). However, as a result of studies by the present inventors, it has been found that the Zr-based oxide has a weaker property of assisting the purification action of Rh for NMHC than Al₂O₃.

Therefore, in the present invention, in particular, it is considered that the NMHC purification performance immediately after the internal combustion engine is started can be improved by adopting the following configurations (I) and (II).
(I) The layer a containing Pd and the layer b containing Pt are provided such that the layer a is located on the upstream side of the layer b in the exhaust gas flow direction.
(II) The ratio C_{Pd}/C_{Pt} of the mass content C_{Pd} of Pd contained in the layer a to the mass content C_{Pt} of Pt contained in the layer b is set to be greater than 1.

Pt is more advantageous than Pd in purifying saturated hydrocarbons among NMHC. Pd is more advantageous than Pt in purifying unsaturated hydrocarbons. Therefore, by using Pd and Pt in combination, an emission amount of the entire NMHC can be reduced as compared with the case where only one of them is used. It is noted that Pt also contributes to purification of NOx. However, Pt has a property that, when exposed to a high temperature environment, particles migrate and aggregate, and the number of active sites is likely to decrease, as compared with Pd. The temperature of the exhaust gas is high on the upstream side in the exhaust gas flow direction, and the temperature of the exhaust gas is lower on a downstream side in the exhaust gas flow direction than on the upstream side. Therefore, in order to dispose the layer containing Pt on the downstream side in the exhaust gas flow direction having a low temperature, in the present invention, the layer a containing Pd is provided on the upstream side in the exhaust gas flow direction and the layer b containing Pt is provided on the downstream side in the exhaust gas flow direction as the configuration (I).

In addition, with the configuration (II), it is possible to dispose a large amount of catalytically active components on the upstream side in the exhaust gas flow direction, which is close to the internal combustion engine (for example, an engine) and whose temperature is likely to rise. Accordingly, even when a total mass of the catalytically active components is the same, the NMHC purification performance immediately after the internal combustion engine is started can be improved.

Based on the above reasons, it is considered that the exhaust gas purification catalyst according to the present invention can achieve both the NOx purification performance immediately after the internal combustion engine is started and the NMHC purification performance immediately after the internal combustion engine is started.

### <Substrate>

The exhaust gas purification catalyst according to the present invention includes a substrate.

As the substrate, a substrate used in a known exhaust gas purification catalyst can be used, and, for example, a substrate including partition walls made of a porous material and exhaust gas flow paths (spaces between the partition walls) defined by the partition walls can be suitably used. As the substrate shape, a known substrate such as a honeycomb, a diesel particulate filter (DPF), or a gasoline particulate filter (GPF) can be suitably used. Examples of the material for the partition walls of the substrate include ceramics such as alumina (Al₂O₃), mullite (3Al₂O₃-2SiO₂), cordierite (2MgO-2Al₂O₃-5SiO₂), aluminum titanate (Al₂TiO₅), and silicon carbide (SiC), and metal materials such as stainless steel.

### <Catalyst Layer>

The exhaust gas purification catalyst according to the present invention includes a catalyst layer.

The catalyst layer is provided on the substrate. The catalyst layer may be provided directly on a surface of at least a part of the substrate (so as to be in contact with the surface of at least a part of the substrate), or may be provided via another layer.

The catalyst layer includes a layer a, a layer b, and a layer c.

### [Layer a]

The layer a contains Pd.

Pd is a catalytically active component.

The mass content C_{Pd} of Pd contained in the layer a is preferably 0.010 % by mass or more, more preferably 0.050 % by mass or more, and still more preferably 0.10 % by mass or more. In addition, C_{Pd} is preferably 15 % by mass or less, more preferably 10 % by mass or less, and still more preferably 5 % by mass or less.

C_{Pd} is a proportion (% by mass) of the mass of Pd contained in the layer a to a mass of the layer a.

The content of each element including Pd in the layer a can be determined by a known method such as scanning electron microscopy-energy dispersive X-ray spectroscopy (SEM-EDX). Specifically, it is as follows.

A sample obtained from the layer a is subjected to elemental analysis using a known method such as SEM-EDX to identify the types of constituent elements in the entire sample and to determine the content (% by mass) of each identified metal element. In each of 10 fields of view of the SEM, the content (% by mass) of each metal element is determined, and an average value of the contents (% by mass) of each metal element in the 10 fields of view is defined as the content (% by mass) of each metal element in the layer a.

It is noted that when calculating the content (% by mass) by the above method, the content is calculated assuming that Ru, Rh, Pd, Ag, Os, Ir, Pt, and Au are in a metal state, and other metal elements are in an oxide state. Specific forms of oxides in each element are as follows. An oxide of a rare earth element other than Ce, Pr, and Tb is a sesquioxide (M₂O₃, M represents a rare earth element other than Ce, Pr, and Tb), an oxide of Ce is CeO₂, an oxide of Pr is Pr₆O₁₁, an oxide of Tb is Tb₄O₇, an oxide of Al is Al₂O₃, an oxide of Zr is ZrO₂, an oxide of Si is SiO₂, an oxide of B is B₂O₃, an oxide of Mg is MgO, an oxide of Ca is CaO, an oxide of Sr is SrO, an oxide of Ba is BaO, an oxide of Fe is Fe₃O₄, an oxide of Mn is Mn₃O₄, an oxide of Cu is CuO, an oxide of Ti is TiO₂, an oxide of Zn is ZnO, and an oxide of Sn is SnO₂.

The layer a may contain, in addition to Pd, a catalytically active component other than Pd. As the catalytically active component other than Pd, known catalytically active components can be used, and examples thereof include Rh, Pt, gold (Au), silver (Ag), iridium (Ir), ruthenium (Ru), and osmium (Os).

The layer a does not contain a catalytically active component other than Pd, or in the case of containing a catalytically active component other than Pd, the proportion thereof is preferably small. Specifically, a mass of the catalytically active component other than Pd contained in the layer a is preferably 30 % by mass or less, more preferably 20 % by mass or less, and still more preferably 10 % by mass or less based on a total mass of Pd and the catalytically active component other than Pd contained in the layer a.

The layer a may further contain components other than those described above.

For example, the layer a may contain a Ce-Zr-based composite oxide.

The "Ce-Zr-based composite oxide" refers to a composite oxide containing Ce and Zr, in which a content of Ce in terms of CeO₂ in the composite oxide is 5 % by mass or more and 95 % by mass or less with respect to a mass of the composite oxide, and a content of Zr in terms of ZrO₂ in the composite oxide is 5 % by mass or more and 95 % by mass or less with respect to the mass of the composite oxide.

The Ce-Zr-based composite oxide is usually in a particulate form. Whether the layer a contains the Ce-Zr-based composite oxide can be determined by a known method such as SEM-EDX. Specifically, it is as follows. First, a sample including the layer a is analyzed by SEM-EDX, and particles containing both Ce and Zr are identified based on the obtained elemental mapping. Next, composition analysis (elemental analysis) is performed on the identified particles, and when the result of the composition analysis is within the above range, it can be determined that the material is a Ce-Zr-based composite oxide.

The Ce-Zr-based composite oxide can function as an oxygen storage component (OSC material).

In addition, the Ce-Zr-based composite oxide can function as a support component that supports the above catalytically active component. It is noted that "supporting the catalytically active component" refers to a state where the catalytically active component is physically or chemically adsorbed or held on an outer surface or an inner surface of pores. Specifically, it can be determined that the support component supports the catalytically active component by, for example, confirming from elemental mapping obtained by analyzing a cross section of the exhaust gas purification catalyst using SEM-EDX that the support component and the catalytically active component are present in the same region.

The content of Ce in terms of CeO₂ in the Ce-Zr-based composite oxide that the layer a may contain is preferably 10 % by mass or more and 70 % by mass or less, more preferably 20 % by mass or more and 60 % by mass or less, and still more preferably 30 % by mass or more and 50 % by mass or less, with respect to the mass of the Ce-Zr-based composite oxide.

The content of Zr in terms of ZrO₂ in the Ce-Zr-based composite oxide that the layer a may contain is preferably 10 % by mass or more and 80 % by mass or less, more preferably 20 % by mass or more and 75 % by mass or less, and still more preferably 30 % by mass or more and 70 % by mass or less, with respect to the mass of the Ce-Zr-based composite oxide.

The Ce-Zr-based composite oxide that the layer a may contain may contain a rare earth element other than Ce and/or an alkaline earth metal element such as barium (Ba), strontium (Sr), and calcium (Ca). Examples of the rare earth element other than Ce include scandium (Sc), yttrium (Y), lanthanum (La), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), and lutetium (Lu). These rare earth elements may be added to the Ce-Zr-based composite oxide as an oxide, for example. The rare earth element and/or the alkaline earth metal element contained in the Ce-Zr-based composite oxide may be one kind or two or more kinds.

In the case where the layer a contains the Ce-Zr-based composite oxide, a content of the Ce-Zr-based composite oxide contained in the layer a is preferably 40 % by mass or more, more preferably 50 % by mass or more, and still more preferably 60 % by mass or more, with respect to the mass of the layer a. In addition, the content of the Ce-Zr-based composite oxide contained in the layer a is preferably 90 % by mass or less, more preferably 85 % by mass or less, and still more preferably 80 % by mass or less, with respect to the mass of the layer a.

The content of the Ce-Zr-based composite oxide contained in the layer a can be determined by a well-known method such as SEM-EDX. Specifically, it is as follows.
(1) A sample obtained from the layer a is subjected to elemental analysis using a known method such as SEM-EDX to identify the kinds of constituent elements of the entire sample, and to determine the content (% by mass) of each identified element.
(2) The sample obtained from the layer a is subjected to elemental mapping using a known method such as SEM-EDX to identify the kinds of particles contained in the sample (for example, Ce-Zr-based composite oxide particles and, in some cases, other particles).
(3) For each kind of particle, a plurality of arbitrarily selected particles (for example, 50 particles) are subjected to elemental analysis by SEM-EDX to identify the kinds of constituent elements of the particles, and to determine the content (% by mass) of each identified element. For each kind of particle, an average value of the contents (% by mass) of each element is determined.
(4) An equation representing a relationship among the content (% by mass) of each element in the sample, the content (% by mass) of each element in each kind of particle, and the content (% by mass) of each kind of particle in the sample is created and solved to calculate the content (% by mass) of each kind of particle in the sample, and this is defined as the content (% by mass) of each kind of particle in the layer a.

The layer a may contain an OSC material other than the Ce-Zr-based composite oxide. The OSC material can be used without particular limitation as long as it is a metal oxide in which a valence of a constituent element changes under operating conditions of the exhaust gas purification catalyst and has an ability to store oxygen, and examples thereof include oxides of elements such as manganese (Mn), iron (Fe), and copper (Cu) in which the valence state easily changes under use conditions of the catalyst, and composite oxides containing these elements.

The layer a may contain an inorganic oxide other than the oxygen storage component as a support. Examples of inorganic oxides other than the oxygen storage component include metal oxides other than the oxygen storage component described above, for example, Al₂O₃, ZrO₂, SiO₂, TiO₂, rare earth oxides such as La₂O₃, zeolite (aluminosilicate), oxide materials based on MgO, ZnO, SnO₂, and the like, and oxide materials obtained by combining these materials. Other examples include phosphates and borates of aluminum (Al), zirconium (Zr), silicon (Si), titanium (Ti), rare earth elements, magnesium (Mg), and zinc (Zn). The inorganic oxide other than the oxygen storage component is preferably a porous body. Examples of the porous body include those having a BET specific surface area of 30 m²/g or more and 600 m²/g or less.

Further, the layer a may contain an alkaline earth metal compound from the viewpoint of heat resistance and suppressing a decrease in catalytic activity due to phosphorus poisoning. Preferred examples of the alkaline earth metal element include Sr and Ba. Examples of the alkaline earth metal compound include oxides and carbonates.

The layer a may contain a binder. The binder can be selected from, for example, alumina, zirconia, titania, silica, and ceria.

The mass of the layer a per unit volume of a portion of the substrate where the layer a is formed is preferably 20 g/L or more and 200 g/L or less, more preferably 50 g/L or more and 180 g/L or less, and still more preferably 70 g/L or more and 160 g/L or less.

### [Layer b]

The layer b contains Pt.

Pt is a catalytically active component.

The mass content C_{Pt} of Pt contained in the layer b is preferably 0.010 % by mass or more, more preferably 0.050 % by mass or more, and still more preferably 0.10 % by mass or more. In addition, C_{Pt} is preferably 10 % by mass or less, more preferably 5 % by mass or less, and still more preferably 3 % by mass or less.

C_{Pt} is a proportion (% by mass) of the mass of Pt contained in the layer b to a mass of the layer b.

The content of Pt in the layer b can be determined by the same method as the content of Pd in the layer a described above.

The layer b may contain, in addition to Pt, a catalytically active component other than Pt. As the catalytically active component other than Pt, known catalytically active components can be used, and examples thereof include Rh, Pd, Au, Ag, Ir, Ru, and Os.

The layer b does not contain a catalytically active component other than Pt, or in the case of containing a catalytically active component other than Pt, the proportion thereof is preferably small. Specifically, a mass of the catalytically active component other than Pt contained in the layer b is preferably 30 % by mass or less, more preferably 20 % by mass or less, and still more preferably 10 % by mass or less based on a total mass of Pt and the catalytically active component other than Pt contained in the layer b.

The layer b may further contain components other than those described above.

For example, the layer b may contain a Ce-Zr-based composite oxide.

The Ce-Zr-based composite oxide can function as an OSC material.

In addition, the Ce-Zr-based composite oxide can function as a support component that supports the above catalytically active component.

Whether the layer b contains the Ce-Zr-based composite oxide can be determined in the same manner as whether the layer a contains the Ce-Zr-based composite oxide.

The content of Ce in terms of CeO₂ in the Ce-Zr-based composite oxide that the layer b may contain is preferably 10 % by mass or more and 70 % by mass or less, more preferably 20 % by mass or more and 60 % by mass or less, and still more preferably 30 % by mass or more and 50 % by mass or less, with respect to the mass of the Ce-Zr-based composite oxide.

The content of Zr in terms of ZrO₂ in the Ce-Zr-based composite oxide that the layer b may contain is preferably 10 % by mass or more and 80 % by mass or less, more preferably 20 % by mass or more and 75 % by mass or less, and still more preferably 30 % by mass or more and 70 % by mass or less, with respect to the mass of the Ce-Zr-based composite oxide.

The Ce-Zr-based composite oxide that the layer b may contain may contain a rare earth element other than Ce and/or an alkaline earth metal element such as Ba, Sr, or Ca. Examples of the rare earth element other than Ce are the same as those described for the layer a.

In the case where the layer b contains the Ce-Zr-based composite oxide, a content of the Ce-Zr-based composite oxide contained in the layer b is preferably 40 % by mass or more, more preferably 50 % by mass or more, and still more preferably 60 % by mass or more, with respect to the mass of the layer b. In addition, the content of the Ce-Zr-based composite oxide contained in the layer b is preferably 90 % by mass or less, more preferably 85 % by mass or less, and still more preferably 80 % by mass or less, with respect to the mass of the layer b.

The content of the Ce-Zr-based composite oxide contained in the layer b can be determined by the same method as the content of the Ce-Zr-based composite oxide contained in the layer a.

The layer b may contain an OSC material other than the Ce-Zr-based composite oxide. Examples of the OSC material are the same as those described for the layer a.

The layer b may contain an inorganic oxide other than the oxygen storage component as a support. Examples of the inorganic oxide other than the oxygen storage component are the same as those described for the layer a.

Further, the layer b may contain an alkaline earth metal compound from the viewpoint of the heat resistance and suppressing the decrease in catalytic activity due to phosphorus poisoning. Preferred examples of the alkaline earth metal element include Sr and Ba. Examples of the alkaline earth metal compound include oxides and carbonates.

The layer b may contain a binder. The binder can be selected from, for example, alumina, zirconia, titania, silica, and ceria.

The mass of the layer b per unit volume of a portion of the substrate where the layer b is formed is preferably 20 g/L or more and 200 g/L or less, more preferably 50 g/L or more and 180 g/L or less, and still more preferably 70 g/L or more and 160 g/L or less.

### [Layer c]

The layer c contains Rh, a Ce-Zr-based composite oxide, and a Zr-based oxide.

Rh is a catalytically active component.

A mass content C_{Rh} of Rh contained in the layer c is preferably 0.0010 % by mass or more, more preferably 0.0050 % by mass or more, and still more preferably 0.010 % by mass or more. In addition, C_{Rh} is preferably 5 % by mass or less, more preferably 3 % by mass or less, and still more preferably 1 % by mass or less.

C_{Rh} is a proportion (% by mass) of the mass of Rh contained in the layer c to a mass of the layer c.

The content of Rh in the layer c can be determined by the same method as the content of Pd in the layer a described above.

The layer c may contain, in addition to Rh, a catalytically active component other than Rh. As the catalytically active component other than Rh, known catalytically active components can be used, and examples thereof include Pt, Pd, Au, Ag, Ir, Ru, and Os.

In the case where the layer c contains Pt, a content of Pt contained in the layer c with respect to a total mass of Rh and Pt contained in the layer c is preferably 10 % by mass or more and 60 % by mass or less, more preferably 20 % by mass or more and 50 % by mass or less, and still more preferably 30 % by mass or more and 40 % by mass or less.

The layer c contains a Ce-Zr-based composite oxide.

The Ce-Zr-based composite oxide can function as an OSC material.

In addition, the Ce-Zr-based composite oxide can function as a support component that supports the above catalytically active component.

Whether the layer c contains the Ce-Zr-based composite oxide can be determined in the same manner as whether the layer a contains the Ce-Zr-based composite oxide.

The content of Ce in terms of CeO₂ in the Ce-Zr-based composite oxide contained in the layer c is preferably 5 % by mass or more and 40 % by mass or less, more preferably 8 % by mass or more and 30 % by mass or less, and still more preferably 10 % by mass or more and 20 % by mass or less, with respect to the mass of the Ce-Zr-based composite oxide.

The content of Zr in terms of ZrO₂ in the Ce-Zr-based composite oxide contained in the layer c is preferably 20 % by mass or more and 95 % by mass or less, more preferably 30 % by mass or more and 90 % by mass or less, and still more preferably 40 % by mass or more and 85 % by mass or less, with respect to the mass of the Ce-Zr-based composite oxide.

The Ce-Zr-based composite oxide contained in the layer c may contain a rare earth element other than Ce or an alkaline earth metal element such as Ba, Sr, or Ca. Examples of the rare earth element other than Ce are the same as those described for the layer a.

The content of the Ce-Zr-based composite oxide contained in the layer c is preferably 1 % by mass or more, more preferably 5 % by mass or more, still more preferably 10 % by mass or more, and particularly more preferably 12 % by mass or more, with respect to the mass of the layer c. In addition, the content of the Ce-Zr-based composite oxide contained in the layer c is preferably 90 % by mass or less, more preferably 50 % by mass or less, and still more preferably 20 % by mass or less, with respect to the mass of the layer c.

The content of the Ce-Zr-based composite oxide contained in the layer c can be determined by the same method as the content of the Ce-Zr-based composite oxide contained in the layer a.

The layer c may contain an OSC material other than the Ce-Zr-based composite oxide. Examples of the OSC material are the same as those described for the layer a. However, from the viewpoint of suppressing a decrease in activity due to the oxidation of Rh, the layer c does not contain an OSC material other than the Ce-Zr-based composite oxide, or in the case where the layer c contains an OSC material other than the Ce-Zr-based composite oxide, the content of the OSC material other than the Ce-Zr-based composite oxide contained in the layer c is preferably 50 % by mass or less, more preferably 30 % by mass or less, more preferably 20 % by mass or less, still more preferably 10 % by mass or less, even more preferably 5 % by mass or more, and particularly preferably 1 % by mass or less, with respect to the mass of the layer c.

The layer c contains a Zr-based oxide.

The "Zr-based oxide" refers to an oxide containing Zr, in which the content of Zr in terms of ZrO₂ in the oxide is 50 % by mass or more with respect to the mass of the oxide, and the content of Ce in terms of CeO₂ in the oxide is less than 5 % by mass with respect to the mass of the oxide.

The Zr-based oxide can function as a support component that supports the above catalytically active component.

Whether the layer c contains the Zr-based oxide can be determined in the same manner as whether the layer a contains the Ce-Zr-based composite oxide.

The content of Zr in terms of ZrO₂ in the Zr-based oxide contained in the layer c is preferably 50 % by mass or more and 98 % by mass or less, more preferably 60 % by mass or more and 95 % by mass or less, and still more preferably 70 % by mass or more and 90 % by mass or less, with respect to the mass of the Zr-based oxide.

The content of Ce in terms of CeO₂ in the Zr-based oxide contained in the layer c is preferably less than 3 % by mass, and more preferably 0 % by mass (that is, Ce is not contained) with respect to the mass of the Zr-based oxide.

The Zr-based oxide contained in the layer c may contain a rare earth element other than Ce or an alkaline earth metal element such as Ba, Sr, or Ca. Examples of the rare earth element other than Ce include Sc, Y, La, Pr, Nd, Sm, Eu, Gd, Tb, Dy, Ho, Er, Tm, Yb, and Lu.

A mass content C_{ZrO2} of the Zr-based oxide contained in the layer c is preferably 40 % by mass or more, more preferably 50 % by mass or more, still more preferably 60 % by mass or more, and particularly preferably 70 % by mass or more. In addition, C_{ZrO2} is preferably 95 % by mass or less, more preferably 90 % by mass or less, and still more preferably 85 % by mass or less.

C_{ZrO2} is a proportion (% by mass) of the mass of the Zr-based oxide contained in the layer c to the mass of the layer c.

The content of the Zr-based oxide contained in the layer c can be determined by the same method as the content of the Ce-Zr-based composite oxide contained in the layer a.

From the viewpoint of improving the OSC ability and suppressing the decrease in activity due to the oxidation of Rh, a ratio M_{ZrO2}/M_{CZ} of a mass M_{ZrO2} of the Zr-based oxide contained in the layer c to a mass M_{CZ} of the Ce-Zr-based composite oxide contained in the layer c is preferably 1.0 or more and 7.0 or less, more preferably 1.5 or more and 6.0 or less, still more preferably 2.0 or more and 6.0 or less, particularly preferably 3.0 or more and 6.0 or less, and most preferably 4.0 or more and 5.5 or less.

In particular, when M_{ZrO2}/M_{CZ} is 1.5 or more, the decrease in activity due to the oxidation of Rh can be effectively suppressed, and when M_{ZrO2}/M_{CZ} is 6.0 or less, the OSC ability can be further improved.

The layer c may further contain components other than those described above.

The layer c may contain an inorganic oxide other than the oxygen storage component and the Zr-based oxide as a support. Examples of the inorganic oxide other than the oxygen storage component and the Zr-based oxide include those other than ZrO₂ in the description of the layer a described above, including Al₂O₃.

As described above, since Al₂O₃ has a high specific heat, from the viewpoint of improving NOx purification performance immediately after an internal combustion engine is started, it is preferable that the layer c contain no Al, or, when the layer c contains Al, that the content of Al in terms of Al₂O₃ be 30% by mass or less, with respect to the mass of the layer c.

In the case where the layer c contains Al, the content of Al in terms of Al₂O₃ is more preferably 22 % by mass or less, still more preferably 15 % by mass or less, and particularly preferably 13 % by mass or less, with respect to the mass of the layer c. It is noted that in the case where a binder contained in the layer c contains an Al element, the content of Al contained in the layer c in terms of Al₂O₃ also includes Al derived from the binder.

Further, the layer c may contain an alkaline earth metal compound from the viewpoint of the heat resistance and suppressing the decrease in catalytic activity due to phosphorus poisoning. Preferred examples of the alkaline earth metal element include Sr and Ba. Examples of the alkaline earth metal compound include oxides and carbonates.

The layer c may contain a binder. The binder can be selected from, for example, alumina, zirconia, titania, silica, and ceria.

In the layer c, at least a part of Rh is supported on the Zr-based oxide.

When Rh is supported on the Zr-based oxide, a phenomenon in which Rh is oxidized by the Ce-Zr-based composite oxide and its activity decreases is suppressed. Meanwhile, when Rh is supported on the Ce-Zr-based composite oxide, the activity of Rh decreases, while the OSC ability of the Ce-Zr-based composite oxide is improved, and the purification performance of the entire layer c is improved.

From the above, a mass percentage of Rh supported on the Zr-based oxide in the layer c based on a total mass of Rh contained in the layer c is preferably 50 % by mass or more and 90 % by mass or less, more preferably 60 % by mass or more and 87 % by mass or less, and still more preferably 70 % by mass or more and 85 % by mass or less.

A mass percentage of Rh supported on the Ce-Zr-based composite oxide in the layer c based on the total mass of Rh contained in the layer c is preferably 10 % by mass or more and 50 % by mass or less, more preferably 13 % by mass or more and 40 % by mass or less, and still more preferably 15 % by mass or more and 30 % by mass or less.

In order to adjust the mass percentage of Rh supported on the Zr-based oxide or the Ce-Zr-based composite oxide in the layer c based on the total mass of Rh contained in the layer c, for example, a mass ratio of the Ce-Zr-based composite oxide to the Zr-based oxide may be adjusted when mixing a source of Rh, the Ce-Zr-based composite oxide, the Zr-based oxide, and a solvent in preparing a slurry for forming the layer c, which will be described later.

The mass of the layer c per unit volume of a portion of the substrate where the layer c is formed is preferably 40 g/L or more and 160 g/L or less, more preferably 60 g/L or more and 140 g/L or less, and still more preferably 80 g/L or more and 120 g/L or less.

### [C_{Pd}/C_{Pt}]

In the exhaust gas purification catalyst according to the present invention, the ratio C_{Pd}/C_{Pt} of the mass content C_{Pd} of Pd contained in the layer a to the mass content C_{Pt} of Pt contained in the layer b is greater than 1.

C_{Pd}/C_{Pt} is preferably 1.5 or more, more preferably 2.0 or more, and still more preferably 2.5 or more. In addition, C_{Pd}/C_{Pt} may be 50.0 or less, 30.0 or less, 10.0 or less, or 5.0 or less.

### [C_{Pd}/C_{ZrO2}]

Pd has an excellent purification effect on unsaturated hydrocarbons among NMHC, and is preferably used in an amount corresponding to the Zr-based oxide from the viewpoint of cost reduction.

In the exhaust gas purification catalyst according to the present invention, a ratio C_{Pd}/C_{ZrO2} of the mass content C_{Pd} of Pd contained in the layer a to the mass content C_{ZrO2} of the Zr-based oxide contained in the layer c is preferably 0.015 or more and 0.120 or less, more preferably 0.015 or more and 0.080 or less, and still more preferably 0.015 or more and 0.050 or less.

### [C_{Pt}/C_{ZrO2}]

Pt has an excellent purification effect on saturated hydrocarbons among NMHC. On the other hand, Pt has a property of easily aggregating when exposed to a high temperature environment, and when Pt is excessive, a distance between Pt particles is smaller, and the Pt particles more easily aggregate. Therefore, it is preferable to use Pt in an amount corresponding to the Zr-based oxide.

In the exhaust gas purification catalyst according to the present invention, a ratio C_{Pt}/C_{ZrO2} of the mass content C_{Pt} of Pt contained in the layer b to the mass content C_{ZrO2} of the Zr-based oxide contained in the layer c is preferably 0.001 or more and 0.008 or less, more preferably 0.002 or more and 0.007 or less, and still more preferably 0.003 or more and 0.006 or less.

### <Layer Configuration of Exhaust Gas Purification Catalyst>

In the exhaust gas purification catalyst according to the present invention, the layer a is provided on the upstream side of the layer b in the exhaust gas flow direction (hereinafter, in the case of simply referring to "upstream" and "downstream", it means upstream in the exhaust gas flow direction and downstream in the exhaust gas flow direction, respectively). Here, the layer a being provided on the upstream side of the layer b means that an upstream end portion of the layer a is positioned on the upstream side of an upstream end portion of the layer b, and a downstream end portion of the layer a is positioned on the upstream side of a downstream end portion of the layer b. Accordingly, as described above, it is considered that the layer b containing Pt can be disposed on the downstream side in the exhaust gas flow direction, where the temperature is low, thereby suppressing aggregation of Pt particles and suppressing a reduction in the number of active sites.

In addition, the layer c is laminated with at least one of the layer a or the layer b, and in the laminated portion of the layer c with at least one of the layer a or the layer b, the layer c is provided at a position farther from the substrate than at least one of the layer a or the layer b. Accordingly, in the laminated portion of the layer c with at least one of the layer a or the layer b, the layer c containing Rh comes into contact with the exhaust gas first. It is considered that, when the layer c comes into contact with the high-temperature exhaust gas first, the temperature of the layer c can be raised more quickly, and the NOx purification performance immediately after the internal combustion engine is started in the present invention can be improved.

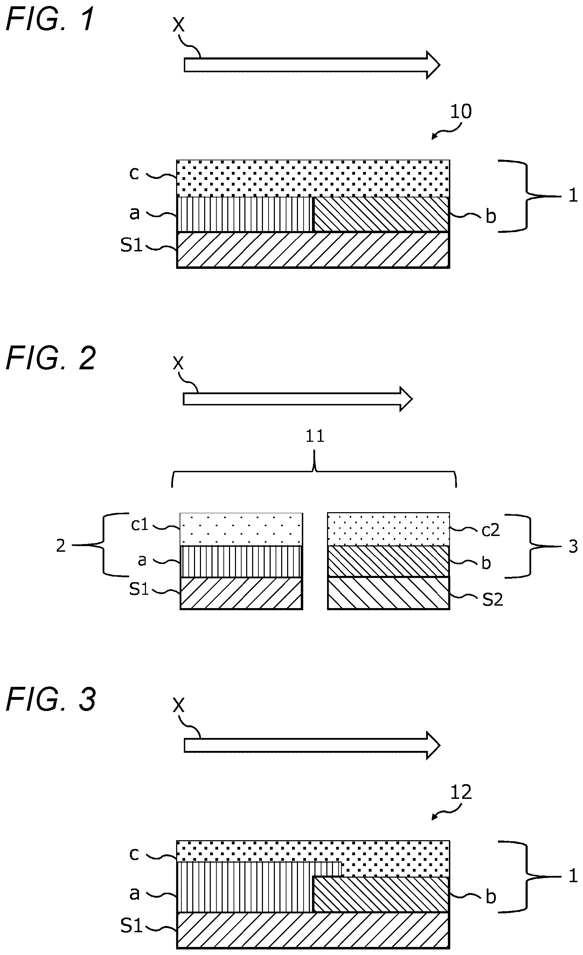

FIG. 1 shows a schematic diagram of an exhaust gas purification catalyst according to one embodiment of the present invention.

An exhaust gas purification catalyst 10 in FIG. 1 includes a substrate S1 and a catalyst layer 1 provided on the substrate S1.

The catalyst layer 1 includes a layer a (denoted by reference sign a), a layer b (denoted by reference sign b), and a layer c (denoted by reference sign c).

The layer a is provided on an upstream side of the layer b in an exhaust gas flow direction X.

The layer c is laminated with the layer a and the layer b.

In a laminated portion of the layer c with the layer a and the layer b, the layer c is provided at a position farther from the substrate S1 than the layer a and the layer b.

In the exhaust gas purification catalyst 10 in FIG. 1, the layer a and the layer b are provided on one substrate, but in the present invention, the layer a and the layer b may be provided on separate substrates, respectively. FIG. 2 shows a schematic diagram of an exhaust gas purification catalyst according to one embodiment of the present invention. An exhaust gas purification catalyst 11 in FIG. 2 includes a substrate S1 and a substrate S2 as substrates. The substrate S1 and the substrate S2 are separate substrates. The exhaust gas purification catalyst 11 includes a catalyst layer 2 including the layer a and a layer c1 provided on the substrate S1, and a catalyst layer 3 including the layer b and a layer c2 provided on the substrate S2. Both the layer c1 and the layer c2 correspond to the layer c.

In the exhaust gas purification catalyst according to the present invention, one of the layer a and the layer b may cover at least a part of the other. FIG. 3 shows a schematic diagram of an exhaust gas purification catalyst according to one embodiment of the present invention. In an exhaust gas purification catalyst 12 in FIG. 3, the layer a covers a part of the layer b. It is noted that the exhaust gas purification catalyst 12 is the same as the exhaust gas purification catalyst 10 in FIG. 1 except that the layer a covers a part of the layer b.

In addition, in the exhaust gas purification catalyst 12 in FIG. 3, the layer a covers a part of the layer b, but in the exhaust gas purification catalyst according to the present invention, the layer b may cover a part of the layer a.

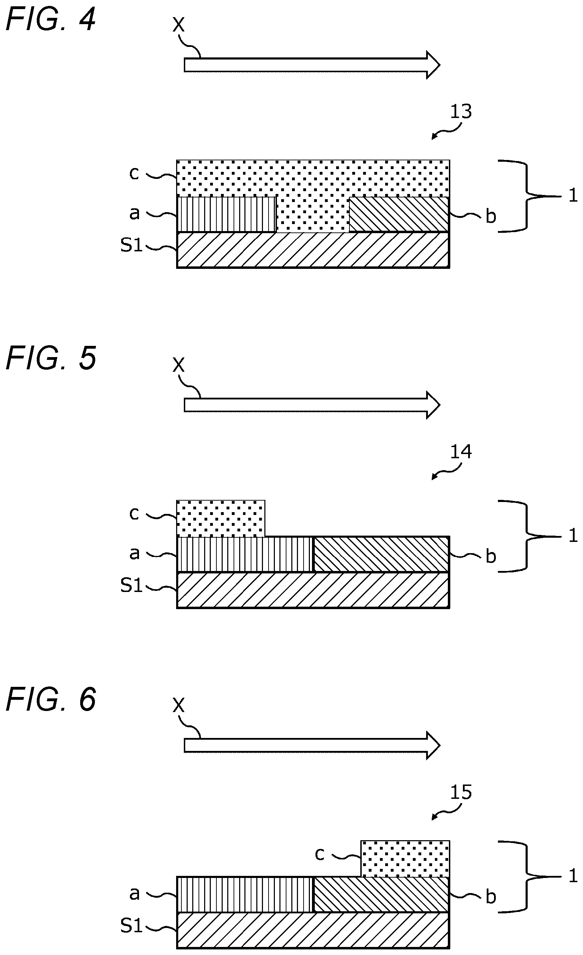

In the exhaust gas purification catalyst 10 in FIG. 1, the layer a and the layer b are in contact with each other, but in the exhaust gas purification catalyst according to the present invention, the layer a and the layer b may be in contact with each other (the layer a and the layer b may be formed without a gap in the exhaust gas flow direction) or may be separated from each other. Examples of a mode in which the layer a and the layer b are separated from each other include a mode in which the layer a and the layer b are provided on separate substrates as in the exhaust gas purification catalyst 11 in FIG. 2 described above, and a mode in which the layer a and the layer b are provided on one substrate so as to be separated from each other. FIG. 4 shows a schematic diagram of an exhaust gas purification catalyst according to one embodiment of the present invention. In an exhaust gas purification catalyst 13 in FIG. 4, the layer a and the layer b are provided on one substrate so as to be separated from each other. The layer c is present between the layer a and the layer b.

In the exhaust gas purification catalyst 13, the layer c is present between the layer a and the layer b, but in the exhaust gas purification catalyst according to the present invention, in the case where the layer a and the layer b are separated from each other, between the layer a and the layer b, the layer c may be present, other layers (layers other than the layer a, the layer b, and the layer c) may be present, or none of the layers may be present (a gap may be present between the layer a and the layer b).

It is noted that the exhaust gas purification catalyst 13 is the same as the exhaust gas purification catalyst 10 in FIG. 1 except for the above configuration.

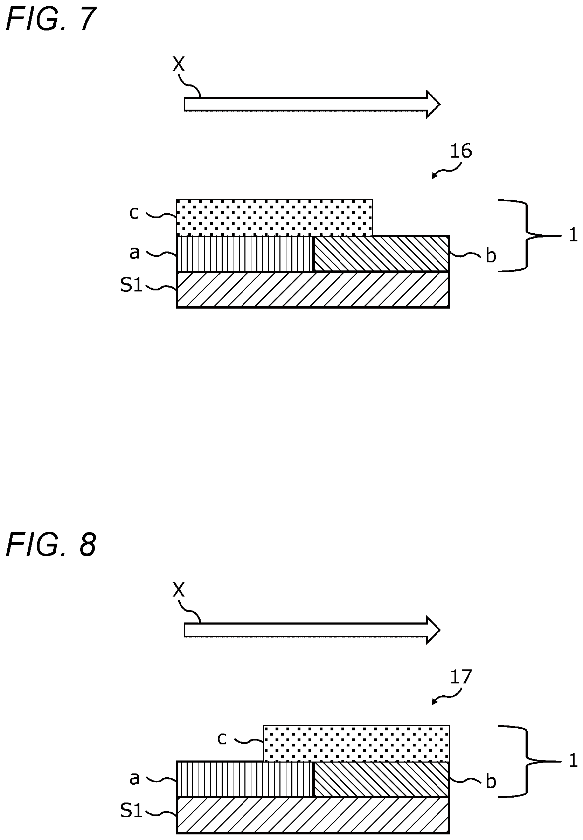

In the exhaust gas purification catalyst 10 in FIG. 1, the layer c is laminated on the entire layer a and layer b, but in the exhaust gas purification catalyst according to the present invention, the layer c may be laminated on at least a part of the layer a and the layer b. FIGs. 5 to 8 each show a schematic diagram of an exhaust gas purification catalyst according to one embodiment of the present invention. In an exhaust gas purification catalyst 14 in FIG. 5, the layer c is laminated on a part of the layer a. In an exhaust gas purification catalyst 15 in FIG. 6, the layer c is laminated on a part of the layer b. In an exhaust gas purification catalyst 16 in FIG. 7, the layer c is laminated on the entire layer a and a part of the layer b. In an exhaust gas purification catalyst 17 in FIG. 8, the layer c is laminated on the entire layer b and a part of the layer a.

It is noted that the exhaust gas purification catalysts 14 to 17 are the same as the exhaust gas purification catalyst 10 in FIG. 1 except for the above configuration.

In addition, in the exhaust gas purification catalyst according to the present invention, the layer c may be laminated on a part of the layer a and a part of the layer b.

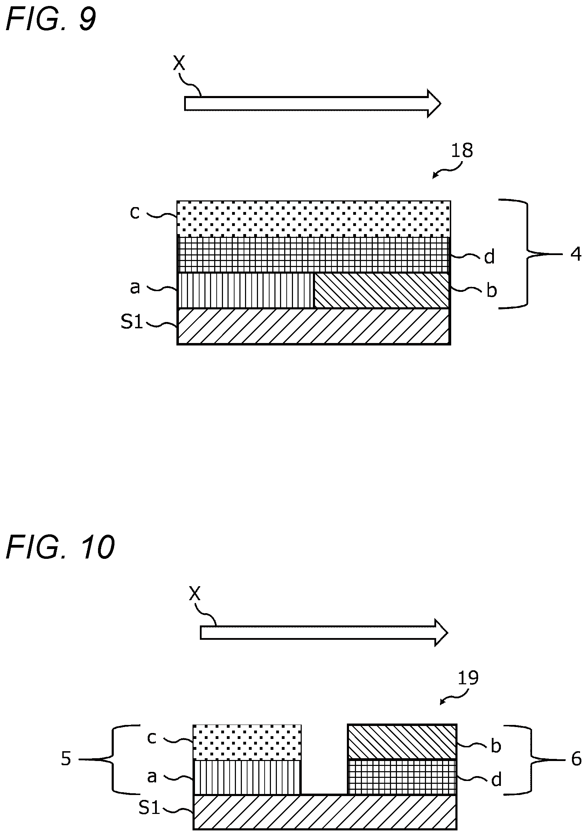

In the exhaust gas purification catalyst according to the present invention, the layer c is laminated with at least one of the layer a or the layer b, and in the laminated portion, the layer c may or may not be in contact with at least one of the layer a or the layer b. In the laminated portion, in the case where the layer c is not in contact with at least one of the layer a or the layer b, another layer (a layer other than the layer a, the layer b, and the layer c) may be provided between the layer c and at least one of the layer a or the layer b. FIG. 9 shows a schematic diagram of an exhaust gas purification catalyst according to one embodiment of the present invention. An exhaust gas purification catalyst 18 in FIG. 9 includes a layer d, which is another layer, between the layer c and the layers a and b in the laminated portion. The exhaust gas purification catalyst 18 includes a catalyst layer 4 including the layer a, the layer b, the layer d, and the layer c. It is noted that examples of the layer d include a layer containing Rh and having a different content of Rh from that of the layer c.

It is noted that the exhaust gas purification catalyst 18 is the same as the exhaust gas purification catalyst 10 in FIG. 1 except for the above configuration.

In the exhaust gas purification catalyst according to the present invention, the substrate and at least one of the layer a or the layer b may or may not be in contact with each other. In the case where the substrate is not in contact with at least one of the layer a or the layer b, another layer (a layer other than the layer a, the layer b, and the layer c) may be present between the substrate and at least one of the layer a or the layer b. FIG. 10 shows a schematic diagram of an exhaust gas purification catalyst according to an embodiment of the present invention. An exhaust gas purification catalyst 19 in FIG. 10 includes the layer d, which is another layer, between the substrate S1 and the layer b. The exhaust gas purification catalyst 19 includes a catalyst layer 5 including the layer a and the layer c provided on the substrate S1, and a catalyst layer 6 including the layer d and the layer b provided on the substrate S1. Examples of the layer d include a layer containing Pt and having a content of Pt different from that of the layer b.

It is noted that the exhaust gas purification catalyst 19 is the same as the exhaust gas purification catalyst 10 in FIG. 1 except for the above configuration.

From the viewpoint of purification of saturated hydrocarbons and purification of unsaturated hydrocarbons, in each embodiment, the length of the layer a, when the length of the substrate is taken as 100%, is preferably 10% or more and 60% or less, more preferably 20% or more and 50% or less, and still more preferably 30% or more and 40% or less. From the viewpoint of purification of saturated hydrocarbons and purification of unsaturated hydrocarbons, in each embodiment, a length of the layer b, when the length of the substrate is taken as 100%, is preferably 40% or more and 90% or less, more preferably 50% or more and 80% or less, and still more preferably 60% or more and 70% or less. From the viewpoint of purification of NOx, in each embodiment, a length of the layer c when the length of the substrate is 100% is preferably 60% or more, more preferably 70% or more, and still more preferably 80% or more. The upper limit is 100% or less. It is noted that the length of the substrate or the catalyst layer means a dimension of the substrate or the catalyst layer along the exhaust gas flow direction X. In addition, the length of the substrate described above means the sum of the lengths of the respective substrates in the case where the substrates are separate as shown in FIG. 2.

The exhaust gas purification catalyst according to the present invention can efficiently purify NOx and NMHC as an exhaust gas purification catalyst for an internal combustion engine. Therefore, it is possible to provide an exhaust gas purification system in which exhaust gas from an internal combustion engine is introduced into the exhaust gas purification catalyst without passing through another exhaust gas purification catalyst, in an exhaust path connected to the internal combustion engine. Examples of internal combustion engines that emit NOx and NMHC include a gasoline engine, an engine using compressed natural gas as fuel, and an engine using gasoline (flex fuel) containing ethanol in any amount as fuel.

### <Production of Catalyst>

The exhaust gas catalyst according to the present invention can be produced by forming the layer a and the layer b on a substrate and forming the layer c on at least one of the layer a or the layer b. However, the ratio C_{Pd}/C_{Pt} of the mass content C_{Pd} of Pd contained in the layer a to the mass content C_{Pt} of Pt contained in the layer b is adjusted to be greater than 1.

The layer a can be formed by mixing a source of Pd (for example, a nitrate, an ammine complex salt, an acetate, or a chloride of Pd) and, if necessary, other components (for example, an OSC material such as a Ce-Zr-based composite oxide, an inorganic oxide other than the OSC material, a binder, or a solvent) to prepare a slurry for forming the layer a, applying the slurry for forming the layer a onto the substrate, followed by drying and calcining.

The layer b can be formed by mixing a source of Pt (for example, a nitrate, an ammine complex salt, an acetate, or a chloride of Pt) and, if necessary, other components (for example, an OSC material such as a Ce-Zr-based composite oxide, an inorganic oxide other than the OSC material, a binder, or a solvent) to prepare a slurry for forming the layer b, applying the slurry for forming the layer b onto the substrate, followed by drying and calcining.

The layer c can be formed by mixing a source of Rh (for example, a nitrate, an ammine complex salt, an acetate, or a chloride of Rh), a Ce-Zr-based composite oxide, a Zr-based oxide, and, if necessary, other components (for example, an OSC material other than the Ce-Zr-based composite oxide, an inorganic oxide other than the OSC material, a binder, or a solvent) to prepare a slurry for forming the layer c, applying the slurry for forming the layer c onto at least one of the layer a or the layer b, followed by drying and calcining.

### EXAMPLES

Next, embodiments of the present invention will be specifically described with reference to the following Examples, but the present invention is not limited to these Examples.

### [Example 1]

### (1) Preparation of Slurry for Forming Layer a

To pure water, 1.2 parts by mass of a palladium nitrate aqueous solution in terms of Pd metal, 70.4 parts by mass of a Ce-Zr-based composite oxide (content of Ce in terms of CeO₂: 40 % by mass, content of Zr in terms of ZrO₂: 50 % by mass, content of one or more rare earth elements other than Ce in terms of oxides: 10 % by mass), 14.2 parts by mass of La₂O₃- modified alumina (content of La₂O₃: 1 % by mass), 6.1 parts by mass of barium hydroxide in terms of oxide, and 8.1 parts by mass of a binder containing alumina sol (content of Al₂O₃ in the solid content: 50 % by mass) in terms of solid content were added, mixed, and stirred to prepare a slurry for forming the layer a.

### (2) Preparation of Slurry for Forming Layer b

To pure water, 0.4 parts by mass of a diamminedinitroplatinum(II) solution in terms of Pt metal, 70.4 parts by mass of a Ce-Zr-based composite oxide (content of Ce in terms of CeO₂: 40 % by mass, content of Zr in terms of ZrO₂: 50 % by mass, content of one or more rare earth elements other than Ce in terms of oxides: 10 % by mass), 15.0 parts by mass of La₂O₃- modified alumina (content of La₂O₃: 1 % by mass), 6.1 parts by mass of barium hydroxide in terms of oxide, and 8.1 parts by mass of a binder containing alumina sol (content of Al₂O₃ in the solid content: 12.5 % by mass) in terms of solid content were added, mixed, and stirred to prepare a slurry for forming the layer b.

### (3) Formation of Layer a and Layer b

As a flow-through type substrate, a honeycomb-shaped porous substrate made of cordierite and having cells extending in an axial direction and defined by partition walls having a thickness of 50 to 70 µm was prepared (manufactured by NGK INSULATORS, LTD.; axial length: 80 mm; outer diameter: 93 mm; volume: 0.54 L; cell density: 900 cells/in²).

A portion of the flow-through type substrate extending from an upstream end in the exhaust gas flow direction X to a position 30 mm from the upstream end was immersed in the slurry for forming the layer a, and the upstream side of the flow-through type substrate was coated with the slurry for forming the layer a.

Next, a portion of the flow-through type substrate extending from a downstream end in the exhaust gas flow direction X to a position 50 mm from the downstream end was immersed in the slurry for forming the layer b, and the downstream side of the flow-through type substrate was coated with the slurry for forming the layer b.

Next, the flow-through type substrate coated with the slurry for forming the layer a and the slurry for forming the layer b was dried at 90°C and then calcined at 450°C. In this way, the layer a and the layer b were formed on the flow-through type substrate without a gap along the exhaust gas flow direction X. The mass of the layer a per unit volume of the portion of the flow-through type substrate where the layer a was formed (washcoat amount) was 127.8 g/L. The mass of the layer b per unit volume of the portion of the flow-through type substrate where the layer b was formed (washcoat amount) was 127.8 g/L. It is noted that the washcoat amount means the mass of the catalyst layer after calcination.

### (4) Preparation of Slurry for Forming Layer c

To pure water, 0.1 parts by mass of a diamminedinitroplatinum(II) solution in terms of Pt metal, 0.2 parts by mass of a rhodium nitrate aqueous solution in terms of Rh metal, 15.0 parts by mass of a Ce-Zr-based composite oxide (content of Ce in terms of CeO₂: 15% by mass; content of Zr in terms of ZrO₂: 70% by mass; content of one or more rare earth elements other than Ce in terms of oxides: 15% by mass), 74.4 parts by mass of a Zr-based oxide (content of Ce in terms of CeO₂: 0% by mass; content of Zr in terms of ZrO₂: 83% by mass; content of one or more rare earth elements other than Ce in terms of oxides: 17% by mass), 0.3 parts by mass of neodymium nitrate in terms of oxide, and 10 parts by mass, in terms of solid content, of a binder containing an alumina sol (content of Al₂O₃ in the solid content: 100% by mass) were added, mixed, and stirred to prepare a slurry for forming the layer c. It is noted that the slurry for forming the layer c contained 10.0 % by mass of Al in terms of Al₂O₃ based on the mass of the layer c after calcination (100 % by mass).

### (5) Formation of Layer c

The entire flow-through type substrate on which layer a and layer b had been formed was immersed in the slurry for forming layer c, thereby coating the entire flow-through type substrate with the slurry for forming layer c.

Next, the flow-through type substrate coated with the slurry for forming the layer c was dried at 90°C and then calcined at 450°C. In this way, the layer c was formed on the layer a and the layer b. The mass of the upper catalyst layer per unit volume of the portion of the substrate where layer c was formed (washcoat amount) was 100 g/L. It is noted that the washcoat amount means the mass of the catalyst layer after calcination.

As described above, the exhaust gas purification catalyst in Example 1 including the flow-through type substrate, the layer a provided on the upstream side of the flow-through type substrate, the layer b provided on the downstream side of the flow-through type substrate, and the layer c provided on the upper side of the layer a and the layer b was produced.

A schematic diagram of the exhaust gas purification catalyst in Example 1 is the same as the exhaust gas purification catalyst 10 in FIG. 1.

Hereinafter, in the exhaust gas purification catalysts in Examples and Comparative Examples, the layer a and a layer at a position corresponding to the layer a are also referred to as a "lower layer upstream catalyst layer".

In the exhaust gas purification catalysts in Examples and Comparative Examples, the layer b and a layer at a position corresponding to the layer b are also referred to as a "lower layer downstream catalyst layer".

In the exhaust gas purification catalysts in Examples and Comparative Examples, the layer c and a layer at a position corresponding to the layer c are also referred to as an "upper catalyst layer".

In addition, a layer provided between the substrate and the upper catalyst layer (layer c) in the exhaust gas purification catalyst in Comparative Example 1 is also referred to as a "lower catalyst layer".

In the exhaust gas purification catalyst in Example 1, the ratio C_{Pd}/C_{Pt} of the mass content C_{Pd} of Pd contained in the layer a to the mass content C_{Pt} of Pt contained in the layer b was 3.0.

The ratio M_{ZrO2}/M_{CZ} of the mass M_{ZrO2} of the Zr-based oxide contained in the layer c to the mass M_{CZ} of the Ce-Zr-based composite oxide contained in the layer c was 5.0.

The ratio C_{Pd}/C_{ZrO2} of the mass content C_{Pd} of Pd contained in the layer a to the mass content C_{ZrO2} of the Zr-based oxide contained in the layer c was 0.0161.

The ratio C_{Pt}/C_{ZrO2} of the mass content C_{Pt} of Pt contained in the layer b to the mass content C_{ZrO2} of the Zr-based oxide contained in the layer c was 0.0054.

The mass percentage of Rh supported on the Zr-based oxide in the layer c based on the total mass of Rh contained in the layer c was 74.8 % by mass.

The mass percentage of Rh supported on the Ce-Zr-based composite oxide in the layer c based on the total mass of Rh contained in the layer c was 15.1 % by mass.

### [Example 2]

### (6) Preparation of Slurry for Forming Layer c

To pure water, 0.1 parts by mass of a diamminedinitroplatinum(II) solution in terms of Pt metal, 0.2 parts by mass of a rhodium nitrate aqueous solution in terms of Rh metal, 45.0 parts by mass of a Ce-Zr-based composite oxide (content of Ce in terms of CeO₂: 15% by mass, content of Zr in terms of ZrO₂: 70% by mass, content of one or more rare earth elements other than Ce in terms of oxides: 15% by mass), 44.4 parts by mass of a Zr-based oxide (content of Ce in terms of CeO₂: 0% by mass, content of Zr in terms of ZrO₂: 83% by mass, content of one or more rare earth elements other than Ce in terms of oxides: 17% by mass), 0.3 parts by mass of neodymium nitrate in terms of oxide, and 10 parts by mass of a binder containing an alumina sol (content of Al₂O₃ in the solid content: 100% by mass) in terms of the solid content were added, mixed, and stirred to prepare a slurry for forming the layer c. It is noted that the slurry for forming the layer c contained 10.0 % by mass of Al in terms of Al₂O₃ based on the mass of the layer c after calcination (100 % by mass).

An exhaust gas purification catalyst in Example 2 was produced in the same manner as in Example 1 except that the slurry for forming the layer c produced in (6) above was used.

In the exhaust gas purification catalyst in Example 2, the ratio C_{Pd}/C_{Pt} of the mass content C_{Pd} of Pd contained in the layer a to the mass content C_{Pt} of Pt contained in the layer b was 3.0.

The ratio M_{ZrO2}/M_{CZ} of the mass M_{ZrO2} of the Zr-based oxide contained in the layer c to the mass M_{CZ} of a Ce-Zr-based oxide contained in the layer c was 1.0.

The ratio C_{Pd}/C_{ZrO2} of the mass content C_{Pd} of Pd contained in the layer a to the mass content C_{ZrO2} of the Zr-based oxide contained in the layer c was 0.0270.

The ratio C_{Pt}/C_{ZrO2} of the mass content C_{Pt} of Pt contained in the layer b to the mass content C_{ZrO2} of the Zr-based oxide contained in the layer c was 0.0090.

The mass percentage of Rh supported on the Zr-based oxide in the layer c based on the total mass of Rh contained in the layer c was 44.7 % by mass.

The mass percentage of Rh supported on the Ce-Zr-based composite oxide in the layer c based on the total mass of Rh contained in the layer c was 45.3 % by mass.

### [Comparative Example 1]

### (7) Preparation of Slurry for Forming Lower Catalyst Layer

To pure water, 0.7 parts by mass of a palladium nitrate aqueous solution in terms of Pd metal, 70.4 parts by mass of a Ce-Zr-based composite oxide (content of Ce in terms of CeO₂: 40% by mass, content of Zr in terms of ZrO₂: 50% by mass, and content of one or more rare earth elements other than Ce in terms of oxides: 10% by mass), 14.7 parts by mass of La₂O₃-modified alumina (content of La₂O₃: 1% by mass), 6.1 parts by mass of barium hydroxide in terms of oxide, and 8.1 parts by mass in terms of solid content of a binder containing an alumina sol (content of Al₂O₃ in the solid content: 50.0% by mass) were added to pure water, and the mixture was mixed and stirred to prepare a slurry for forming the lower catalyst layer.

### (8) Formation of Lower Catalyst Layer

As a flow-through type substrate, a honeycomb porous substrate composed of cordierite similar to that of Example 1 was prepared.

The entire flow-through type substrate was immersed in the slurry for forming the lower catalyst layer, thereby coating the entire flow-through type substrate with the slurry. Next, the flow-through type substrate coated with the slurry for forming the lower catalyst layer was dried at 90°C and then calcined at 450°C. In this way, the lower catalyst layer was formed on the flow-through type substrate along the exhaust gas flow direction X. That is, the lower catalyst layer in Comparative Example 1 consists of only a single layer, and is not composed of two layers, namely, a lower layer upstream catalyst layer and a lower layer downstream catalyst layer, as in the Examples and the other Comparative Examples. The mass of the lower catalyst layer per unit volume of the portion of the flow-through type substrate where the lower catalyst layer was formed (washcoat amount) was 127.8 g/L.

An exhaust gas purification catalyst in Comparative Example 1 was produced in the same manner as in Example 1 except that the lower catalyst layer was formed as in (7) and (8) above instead of the layer a and the layer b.

### [Comparative Example 2]

### (9) Preparation of Slurry for Forming Lower Layer Downstream Catalyst Layer

To pure water, 0.4 parts by mass of a palladium nitrate aqueous solution in terms of Pd metal, 70.4 parts by mass of a Ce-Zr-based composite oxide (content of Ce in terms of CeO₂: 40% by mass, content of Zr in terms of ZrO₂: 50% by mass, and content of one or more rare earth elements other than Ce in terms of oxides: 10% by mass), 15.0 parts by mass of La₂O₃-modified alumina (content of La₂O₃: 1% by mass), 6.1 parts by mass of barium hydroxide in terms of oxide, and 8.1 parts by mass of a binder containing an alumina sol (content of Al₂O₃ in the solid content: 12.5% by mass) in terms of solid content were added, mixed, and stirred to prepare a slurry for forming the lower layer downstream catalyst layer.

An exhaust gas purification catalyst in Comparative Example 2 was produced in the same manner as in Example 1 except that the slurry for forming the lower layer downstream catalyst layer produced in (9) above was used instead of the slurry for forming the layer b.

In the exhaust gas purification catalyst in Comparative Example 2, a ratio C_{Pd}/D_{Pd} of the mass content C_{Pd} of Pd contained in the layer a to the mass content D_{Pd} of Pd in the lower layer downstream catalyst layer was 3.0.

The ratio C_{Pd}/C_{ZrO2} of the mass content C_{Pd} of Pd contained in the layer a to the mass content C_{ZrO2} of the Zr-based oxide contained in the layer c was 0.0161.

### [Comparative Example 3]

### (10) Preparation of Slurry for Forming Upper Catalyst Layer

To pure water, 0.1 parts by mass of a diamminedinitroplatinum(II) solution in terms of Pt metal, 0.2 parts by mass of a rhodium nitrate aqueous solution in terms of Rh metal, 45.0 parts by mass of a Ce-Zr-based composite oxide (content of Ce in terms of CeO₂: 15% by mass, content of Zr in terms of ZrO₂: 70% by mass, and content of one or more rare earth elements other than Ce in terms of oxides: 15% by mass), 44.4 parts by mass of La₂O₃-modified alumina (content of La₂O₃: 1% by mass), 0.3 parts by mass of neodymium nitrate in terms of oxide, and 10 parts by mass in terms of solid content of a binder containing an alumina sol (content of Al₂O₃ in the solid content: 100% by mass) were added, mixed, and stirred to prepare a slurry for forming the upper catalyst layer. It is noted that the slurry for forming the upper catalyst layer contained 54.0 % by mass of Al in terms of Al₂O₃ based on the mass of the upper catalyst layer after calcination (100 % by mass).

An exhaust gas purification catalyst in Comparative Example 3 was produced in the same manner as in Example 1 except that the slurry for forming the upper catalyst layer produced in (10) above was used instead of the slurry for forming the layer c.

In the exhaust gas purification catalyst in Comparative Example 3, the ratio C_{Pd}/C_{Pt} of the mass content C_{Pd} of Pd contained in the layer a to the mass content C_{Pt} of Pt contained in the layer b was 3.0.

The mass percentage of Rh supported on the Zr-based oxide in the layer c based on the total mass of Rh contained in the layer c was 0 % by mass.

The mass percentage of Rh supported on the Ce-Zr-based composite oxide in the layer c based on the total mass of Rh contained in the layer c was 45.3 % by mass.

### [Comparative Example 4]

### (11) Preparation of Slurry for Forming Upper Catalyst Layer

To pure water, 0.1 parts by mass of a diamminedinitroplatinum(II) solution in terms of Pt metal, 0.2 parts by mass of a rhodium nitrate aqueous solution in terms of Rh metal, 45.0 parts by mass of a Zr-based oxide (content of Ce in terms of CeO₂: 0% by mass, content of Zr in terms of ZrO₂: 83% by mass, and content of one or more rare earth elements other than Ce in terms of oxides: 17% by mass), 44.4 parts by mass of La₂O₃-modified alumina (content of La₂O₃: 1% by mass), 0.3 parts by mass of neodymium nitrate in terms of oxide, and 10 parts by mass in terms of solid content of a binder containing an alumina sol (content of Al₂O₃ in the solid content: 100% by mass) were added, mixed, and stirred to prepare a slurry for forming the upper catalyst layer. It is noted that the slurry for forming the upper catalyst layer contained 54.0 % by mass of Al in terms of Al₂O₃ based on the mass of the upper catalyst layer after calcination (100 % by mass).

An exhaust gas purification catalyst in Comparative Example 4 was produced in the same manner as in Example 1 except that the slurry for forming the upper catalyst layer produced in (11) above was used instead of the slurry for forming the layer c.

In the exhaust gas purification catalyst in Comparative Example 4, the ratio C_{Pd}/C_{Pt} of the mass content C_{Pd} of Pd contained in the layer a to the mass content C_{Pt} of Pt contained in the layer b was 3.0.

A ratio C_{Pd}/D_{ZrO2} of the mass content C_{Pd} of Pd contained in the layer a to the mass content D_{ZrO2} of the Zr-based oxide contained in the upper catalyst layer was 0.0267.

A ratio C_{Pt}/D_{ZrO2} of the mass content C_{Pt} of Pt contained in the layer b to the mass content D_{ZrO2} of the Zr-based oxide contained in the upper catalyst layer was 0.0089.

The mass percentage of Rh supported on the Zr-based oxide in the layer c based on the total mass of Rh contained in the layer c was 45.3 % by mass.

The mass percentage of Rh supported on the Ce-Zr-based composite oxide in the layer c based on the total mass of Rh contained in the layer c was 0 % by mass.

### [Comparative Example 5]

### (12) Preparation of Slurry for Forming Upper Catalyst Layer

To pure water, 0.1 parts by mass of a diamminedinitroplatinum(II) solution in terms of Pt metal, 0.2 parts by mass of a rhodium nitrate aqueous solution in terms of Rh metal, 89.4 parts by mass of a Ce-Zr-based composite oxide (content of Ce in terms of CeO₂: 15 % by mass, content of Zr in terms of ZrO₂: 70 % by mass, content of one or more rare earth elements other than Ce in terms of oxides: 15 % by mass), 0.3 parts by mass of neodymium nitrate in terms of oxide, and 10 parts by mass of a binder containing an alumina sol (content of Al₂O₃ in the solid content: 100 % by mass) in terms of solid content were added, mixed, and stirred to prepare a slurry for forming the upper catalyst layer. It is noted that the slurry for forming the upper catalyst layer contained 10.0 % by mass of Al in terms of Al₂O₃ based on the mass of the upper catalyst layer after calcination (100 % by mass).

An exhaust gas purification catalyst in Comparative Example 5 was produced in the same manner as in Example 1 except that the upper catalyst layer forming slurry produced in (12) above was used instead of the slurry for forming the layer c.

In the exhaust gas purification catalyst in Comparative Example 5, the ratio C_{Pd}/C_{Pt} of the mass content C_{Pd} of Pd contained in the layer a to the mass content C_{Pt} of Pt contained in the layer b was 3.0.

The mass percentage of Rh supported on the Zr-based oxide in the layer c based on the total mass of Rh contained in the layer c was 0 % by mass.

The mass percentage of Rh supported on the Ce-Zr-based composite oxide in the layer c based on the total mass of Rh contained in the layer c was 89.9 % by mass.

### [Comparative Example 6]

### (13) Preparation of Slurry for Forming Upper Catalyst Layer

To pure water, 0.1 parts by mass of a diamminedinitroplatinum(II) solution in terms of Pt metal, 0.2 parts by mass of a rhodium nitrate aqueous solution in terms of Rh metal, 89.4 parts by mass of a Zr-based oxide (content of Ce in terms of CeO₂: 0 % by mass, content of Zr in terms of ZrO₂: 83 % by mass, content of one or more rare earth elements other than Ce in terms of oxides: 17 % by mass), 0.3 parts by mass of neodymium nitrate in terms of oxide, and 10 parts by mass of a binder containing an alumina sol (content of Al₂O₃ in the solid content: 100 % by mass) in terms of solid content were added, mixed, and stirred to prepare a slurry for forming the upper catalyst layer. It is noted that the slurry for forming the upper catalyst layer contained 10.0 % by mass of Al in terms of Al₂O₃ based on the mass of the upper catalyst layer after calcination (100 % by mass).

An exhaust gas purification catalyst in Comparative Example 6 was produced in the same manner as in Example 1 except that the slurry for forming upper catalyst layer produced in (13) above was used instead of the slurry for forming the layer c.

In the exhaust gas purification catalyst in Comparative Example 6, the ratio C_{Pd}/C_{Pt} of the mass content C_{Pd} of Pd contained in the layer a to the mass content C_{Pt} of Pt contained in the layer b was 3.0.

The ratio C_{Pd}/D_{ZrO2} of the mass content C_{Pd} of Pd contained in the layer a to the mass content D_{ZrO2} of the Zr-based oxide contained in the upper catalyst layer was 0.0134.

The ratio C_{Pt}/D_{ZrO2} of the mass content C_{Pt} of Pt contained in the layer b to the mass content D_{ZrO2} of the Zr-based oxide contained in the upper catalyst layer was 0.0045.

The mass percentage of Rh supported on the Zr-based oxide in the layer c based on the total mass of Rh contained in the layer c was 89.9 % by mass.

The mass percentage of Rh supported on the Ce-Zr-based composite oxide in the layer c based on the total mass of Rh contained in the layer c was 0 % by mass.

### (Durability Treatment)

The exhaust gas purification catalysts of Examples 1 and 2 and Comparative Examples 1 to 6 were each mounted in an exhaust pipe. The exhaust pipe was attached to a gasoline engine, engine speed, torque, and the like were adjusted so that the catalyst temperature reached 950°C. A durability treatment was then carried out for 50 hours.

### (Evaluation of Exhaust Gas Purification Performance)

A vehicle equipped with the exhaust gas purification catalyst after the durability treatment was operated in accordance with the operating conditions of the Worldwide Harmonized Light Vehicles Test Cycle (WLTC). Emission amounts (emission values) of the non-methane hydrocarbons (NMHC) and nitrogen oxides (NOx) in the exhaust gas having passed through the exhaust gas purification catalyst were measured, and the emission amounts (g/km) of NMHC and NOx per unit travel distance were determined.

A gasoline vehicle was used as the vehicle, certification test fuel was used as the gasoline, and an exhaust gas measurement device manufactured by Horiba, Ltd. was used. Table 1 shows the NMHC emission amount (g/km) and the NOx emission amount (g/km) per unit travel distance at 100 seconds during the test mode. It is considered that the NMHC emission amount and the NOx emission amount at 100 seconds during the test mode represent the NMHC emission amount and the NOx emission amount immediately after an internal combustion engine is started, respectively.

In Table 1, "noble metal contained in the lower layer downstream catalyst layer" means a noble metal serving as a catalytically active component contained in the lower layer downstream catalyst layer. Although the exhaust gas purification catalyst in Comparative Example 1 does not include a lower layer downstream catalyst layer, the noble metal contained in the lower catalyst layer is shown in Table 1 for convenience.

In Table 1, "(A)" represents the ratio of the mass content of the noble metal contained in the lower layer upstream catalyst layer to the mass content of the noble metal contained in the lower layer downstream catalyst layer. Although "(A)" cannot be calculated because the exhaust gas purification catalyst in Comparative Example 1 does not include a lower layer upstream catalyst layer or a lower layer downstream catalyst layer, "(A)" for Comparative Example 1 was set to 1.0 for convenience because the exhaust gas purification catalyst in Comparative Example 1 includes a lower catalyst layer consisting of only one layer.

In Table 1, "(B)" represents the mass content of Al contained in the upper catalyst layer in terms of Al₂O₃, based on the mass of the upper catalyst layer.

In Table 1, "(C)" represents the ratio of the mass of the Zr-based oxide contained in the upper catalyst layer to the mass of the Ce-Zr-based composite oxide contained in the upper catalyst layer.

In Table 1, "(D)" represents the ratio of the mass content of Pd contained in the lower layer upstream catalyst layer to the mass content of the Zr-based oxide contained in the upper catalyst layer.

The mass content of the Zr-based oxide contained in the upper catalyst layer is the ratio (% by mass) of the mass of the Zr-based oxide contained in the upper catalyst layer to the mass of the upper catalyst layer.

The mass content of Pd contained in the lower layer upstream catalyst layer is the ratio (% by mass) of the mass of Pd contained in the lower layer upstream catalyst layer to the mass of the lower layer upstream catalyst layer.

In Table 1, "(E)" represents the ratio of the mass content of Pt contained in the lower layer downstream catalyst layer to the mass content of the Zr-based oxide contained in the upper catalyst layer.

In Table 1, "(F)" represents the NMHC emission amount (g/km) per unit travel distance at 100 seconds during the test mode.

In Table 1, "(G)" represents the NOx emission amount (g/km) per unit travel distance at 100 seconds during the test mode.

In Table 1, "(H)" represents the mass percentage of Rh supported on the Zr-based oxide in the upper catalyst layer based on the total mass of Rh contained in the upper catalyst layer.

In Table 1, "(I)" represents the mass percentage of Rh supported on the Ce-Zr-based composite oxide in the upper catalyst layer based on the total mass of Rh contained in the upper catalyst layer.

**[Table 1]**

| | Noble metal contained in lower layer downstream catalyst layer | (A) | (B) | (C) | (D) | (E) | (F) | (G) | (H) | (I) |
|---|---|---|---|---|---|---|---|---|---|---|
| Example 1 | Pt | 3.0 | 10.0 | 5.0 | 0.0161 | 0.0054 | 0.0299 | 0.00833 | 74.8 | 15.1 |
| Example 2 | Pt | 3.0 | 10.0 | 1.0 | 0.0270 | 0.0090 | 0.0309 | 0.00839 | 44.7 | 45.3 |
| Comparative Example 1 | Pd | 1.0 | 10.0 | 5.0 | - | - | 0.0338 | 0.01018 | 74.8 | 15.1 |
| Comparative Example 2 | Pd | 3.0 | 10.0 | 5.0 | 0.0161 | 0.0000 | 0.0309 | 0.00883 | 74.8 | 15.1 |
| Comparative Example 3 | Pt | 3.0 | 54.0 | 0.0 | - | - | 0.0295 | 0.00885 | 0 | 45.3 |
| Comparative Example 4 | Pt | 3.0 | 54.0 | - | 0.0267 | 0.0089 | 0.0308 | 0.00912 | 45.3 | 0 |
| Comparative Example 5 | Pt | 3.0 | 10.0 | 0.0 | - | - | 0.0312 | 0.00884 | 0 | 89.9 |
| Comparative Example 6 | Pt | 3.0 | 10.0 | - | 0.0134 | 0.0045 | 0.0330 | 0.00907 | 89.9 | 0 |

It was found that, in the exhaust gas purification catalysts in Examples 1 and 2, the values of "(F)" and "(G)" were both small, and both the NOx purification performance and the NMHC purification performance immediately after the internal combustion engine was started were achieved. In particular, it was found that, in Example 1, the values of "(F)" and "(G)" were smaller than those in Example 2, and the NOx purification performance and the NMHC purification performance immediately after the internal combustion engine was started were particularly excellent.

It was found that, in the exhaust gas purification catalysts in Comparative Examples 1 to 6, the values of "(G)" were larger than those in Examples 1 and 2, and the NOx purification performance immediately after the internal combustion engine was started was low. In addition, it was found that, in the exhaust gas purification catalysts in Comparative Examples 1, 5, and 6, the values of "(F)" were larger than those in Examples 1 and 2, and the NMHC purification performance immediately after the internal combustion engine was started was also low.

### INDUSTRIAL APPLICABILITY

According to the present invention, it is possible to provide an exhaust gas purification catalyst capable of achieving both NOx purification performance immediately after an internal combustion engine is started and NMHC purification performance immediately after the internal combustion engine is started.

Although the present invention has been described in detail with reference to specific embodiments, it is apparent to those skilled in the art that various changes and modifications can be made without departing from the spirit and scope of the present invention.

The present application is based on a Japanese patent application (No. 2023-204822) filed on December 4, 2023, the contents of which are incorporated herein by reference.

### REFERENCE SIGNS LIST

S1, S2: substrate
a: layer a
b: layer b
c, c1, c2: layer c
d: other layers
1, 2, 3, 4, 5, 6: catalyst layer
10, 11, 12, 13, 14, 15, 16, 17, 18, 19: exhaust gas purification catalyst
X: exhaust gas flow direction

## Claims

1. An exhaust gas purification catalyst comprising:
a substrate; and
a catalyst layer provided on the substrate,
wherein the catalyst layer includes a layer a, a layer b, and a layer c,
the layer a is provided on an upstream side of the layer b in an exhaust gas flow direction,
the layer c is laminated with at least one of the layer a or the layer b,
in a laminated portion of the layer c with at least one of the layer a or the layer b, the layer c is provided at a position farther from the substrate than at least one of the layer a or the layer b,
the layer a contains Pd,
the layer b contains Pt,
a ratio C_{Pd}/C_{Pt} of a mass content C_{Pd} of Pd contained in the layer a to a mass content C_{Pt} of Pt contained in the layer b is greater than 1,
the layer c contains Rh, a Ce-Zr-based composite oxide, and a Zr-based oxide, and
in the layer c, at least a part of the Rh is supported on the Zr-based oxide.

2. The exhaust gas purification catalyst according to claim 1, wherein the layer c does not contain Al, or in a case where Al is contained, a content of Al in terms of Al₂O₃ is 22 % by mass or less with respect to a mass of the layer c.

3. The exhaust gas purification catalyst according to claim 1 or 2, wherein a ratio M_{ZrO2}/M_{CZ} of a mass M_{ZrO2} of the Zr-based oxide contained in the layer c to a mass M_{CZ} of the Ce-Zr-based composite oxide contained in the layer c is 1.5 or more and 6.0 or less.

4. The exhaust gas purification catalyst according to claim 1 or 2, wherein a ratio C_{Pd}/C_{ZrO2} of the mass content C_{Pd} of Pd contained in the layer a to a mass content C_{ZrO2} of the Zr-based oxide contained in the layer c is 0.015 or more and 0.120 or less.

5. The exhaust gas purification catalyst according to claim 1 or 2, wherein a ratio C_{Pt}/C_{ZrO2} of the mass content C_{Pt} of Pt contained in the layer b to a mass content C_{ZrO2} of the Zr-based oxide contained in the layer c is 0.001 or more and 0.008 or less.
